Europäisches Patentamt

European Patent Office

Office européen des brevets

(19)

(11) **EP 0 676 887 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(51) Int Cl.$^7$: **H04M 15/00**, G06F 7/02

(21) Anmeldenummer: **95103358.8**

(22) Anmeldetag: **08.03.1995**

(54) **Verfahren zur Erzeugung eines digitalen Sinussignales mit einer vorgegebenen Abtastrate und Schaltungsanordnung zur Durchführung des Verfahrens**

Method for generating a digital sinus signal with a predetermined sampling rate and circuit for the implementation of the method

Méthode à générer un signal sinus digital avec une fréquence d'échantillonnage prédéterminée et circuit pour la mise en oeuvre de la méthode

(84) Benannte Vertragsstaaten:
**DE FR GB IT NL**

(30) Priorität: **11.03.1994 DE 4408323**

(43) Veröffentlichungstag der Anmeldung:
**11.10.1995 Patentblatt 1995/41**

(73) Patentinhaber: **Infineon Technologies AG**
**81669 München (DE)**

(72) Erfinder: **Gazsi, Lajos, Dr. Ing.**
**D-40239 Düsseldorf (DE)**

(74) Vertreter: **Zedlitz, Peter, Dipl.-Inf. et al**
**Patentanwalt,**
**Postfach 22 13 17**
**80503 München (DE)**

(56) Entgegenhaltungen:
**DE-A- 3 303 133       FR-A- 2 563 957**

- **PATENT ABSTRACTS OF JAPAN vol. 17 no. 444 (E-1415) ,16.August 1993 & JP-A-05 095435 (NEC CORP) 16.April 1993,**

**Beschreibung**

Die Erfindung betrifft ein Verfahren zur Erzeugung eines digitalen Sinussignales mit einer vorgegebenen Abtastrate und eine Schaltungsanorndung zur Durchführung des Verfahrens.

Eine Teilnehmertelefonleitung wird von einer Gleichspannungsquelle gespeist, die in Reihe mit anderen Spannungssignalquellen geschaltet ist, beispielsweise für die Gesprächssignale im phonischen Band, für die Weckersignale und für die Signale zur Anzeige der Gebühren für den Teilnehmer.

Die Anschlüsse der Leitungen sind parallel zueinander sowohl mit der Gesprächsschaltung als auch mit der Weckerschaltung des Teilnehmertelefongerätes und evt. innerhalb oder außerhalb dieses Telefongerätes mit anderen Vorrichtungen verbunden, beispielsweise einem Anzeigegerät für die fortlaufende Zählung der Gebühren eines gerade geführten Telefongesprächs, die durch die entsprechenden Zentralorgane ausgeführt werden. Eine Vermittlungseinrichtung erzeugt Steuersignale, die normalerweise als "Gebührensignale" bezeichnet werden, und gibt diese an die entsprechende Telefonleitung aus.

Unter derartigen Gebührensignalen versteht man Gebührenimpulse mit einer Frequenz von 12 KHz bzw. 16 KHz, die während eines Gesprächs mit einer Dauer von etwa 200 msec auf einer Teilnehmeranschlußleitung gesendet werden, um die Gebührenanzeige eine Einheit weiter zählen zu lassen. Um die benachbarten Frequenzbereiche nicht zu stören, müssen diese Gebührenimpulse weich ein- und ausgeschaltet werden. Hierzu eignen sich z.B. Einschwingkurven mit einer Gaußfunktion.

Aus der DE 35 22 077 A1 bzw. der DE 35 16 007 A1 sind Schaltungsanordnungen für Signalgeneratoren zur Erzeugung derartiger Gebührensignale in analoger Schaltungstechnik bekannt.

Aufgabe der vorliegenden Erfindung ist es ein Verfahren zur Erzeugung eines digitalen Sinussignales mit einer vorgegebenen Abtastrate und eine Schaltungsanordnung zur Durchführung des Verfahrens anzugeben, das die obigen Erfordernisse erfüllt.

Diese Aufgabe wird durch den kennzeichnenden Teil des Anspruchs 1 bzw. 4 gelöst. Weiterbildungen sind Kennzeichen der Unteransprüche.

Vorteil der Erfindung ist es, daß die eigentlichen Sinusabtastwerte bei einer niedrigen Abtastrate generiert werden und die Hüllkurve bei dieser niedrigen Abtastrate generiert wird und dann durch Abtastratenerhöhung und Filterung das eigentlich zu erzeugende digitale Sinussignal gewonnen wird. Die aufwendige Berechnung der einzelnen Abtastwerte und deren Ein/Ausschwinghüllkurve bei einer vorgegebenen hohen Abtastrate erübrigt sich so.

Die Erfindung wird nachfolgend anhand von 7 Figuren näher erläutert.

Es zeigen

Figur 1  1 ein Blockschaltbild einer erfindungsgemäßen Anordnung zur Durchführung des Verfahrens,

Figur 2  ein Teil einer alternativen Ausführungsform der erfindungsgemäßen Anordnung in Blockschaltbildform

Figur 3  eine Ausführungsform einer Anordnung zur Erzeugung digitaler Impulse mit einer ersten Abtastrate,

Figur 4  eine Ausführungsform eines digitalen Filters zur Erzeugung einer Hüllkurve,

Figur 5  eine Schaltungsanordnung zur Abtastratenverdoppelung und einem nachgeschalteten Filter mit weiterer Abtastratenverdoppelung,

Figur 6  eine weitere Ausführungsform einer Schaltungsanordnung zur Generierung von im Vorzeichen alternierenden Abtastwerten,

Figur 7  eine weitere Ausführungsform eines Filters zur Generierunq einer Hüllkurve,

Figur 8  eine weitere Schaltungsanordnung zur Abtastratenverdoppelung mit nachgeschaltetem Filter und weiterer Abtastratenverdoppelung.

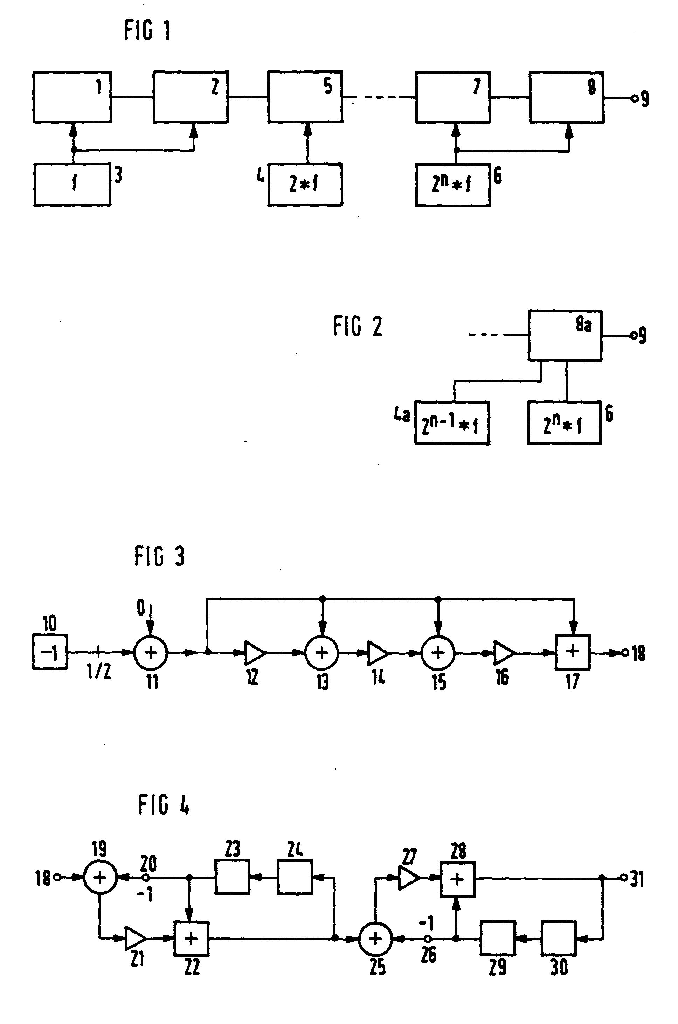

In Figur 1 ist mit 1 eine erste Einheit zur Generierung von Impulsfolgen bezeichnet. Diese Einheit generiert Abtastwerte mit einer Frequenz f symbolisiert durch die Einheit 3 zur Steuerung der Abtastrate, welche die Einheit 1 und eine Einheit 2 ansteuert. Der Ausgang der Einheit 1 ist mit dem Eingang der Einheit 2 verbunden. Diese Einheit 2 dient zur Generierung einer Hüllkurve. Der Ausgang der Einheit 2 ist mit dem Eingang einer Einheit 5 verbunden. Diese Einheit 5 dient zur Erhöhung der Abtastrate und wird von einem Taktsignal mit doppelter Frequenz aus der Einheit 4 getaktet. Strichpunktiert ist angedeutet, daß nachfolgend mehrere Stufen zur weiteren Verdoppelung der Abtastrate vorgesehen sein können. In Figur 1 ist lediglich eine zweite Einheit 7 mit zugehöriger Takteinheit 6 mit einer Frequenz von $2^n.f$ angegeben. Der Einheit 7 ist ein Filter 8, welches von der selben Taktfrequenz wie Einheit 7 gespeist wird, nachgeschaltet. Am Ausgang der Einheit 8 ist an einer Anschlußklemme 9 das digitale Sinussignal mit der vorgegebenen Abtastrate abgreifbar.

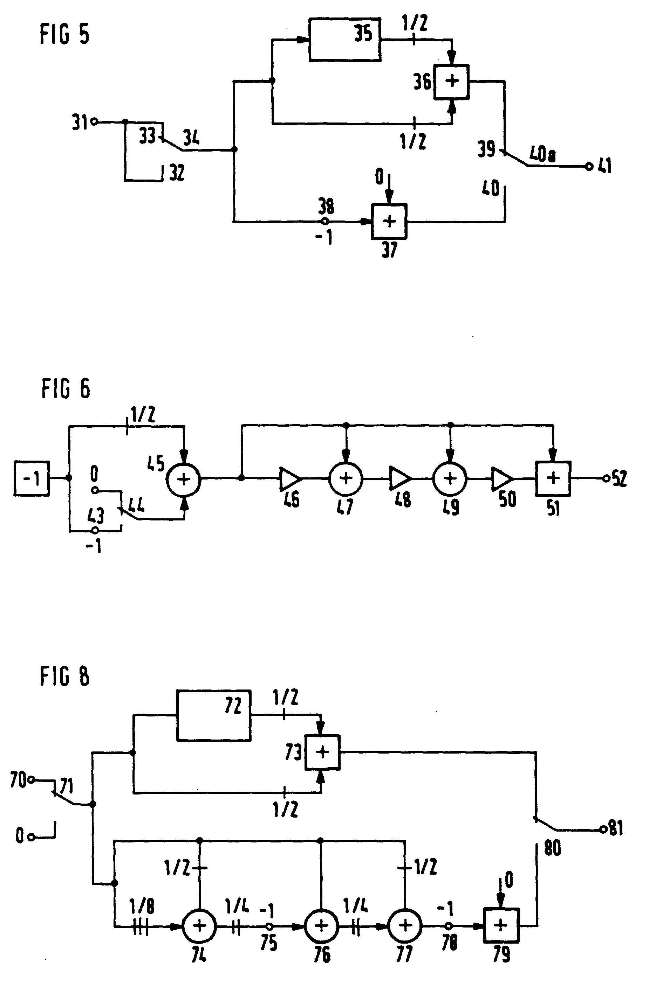

Alternativ ist in Figur 2 eine weitere Ausführungsform teilsweise dargestellt. Die Einheiten 1 bis 5 entsprechen den in Figur 1 dargestellten. Den Einheiten zur Abtastratenverdoppelung ist hier ein Filter 8a nachgeschalte, welches am Ausgang in zwei Signalwege aufgespalten wird. Eine Ausführungsform für ein derartiges Filter wird später mit Bezugnahme auf die Figur 5 bzw. 8 näher beschrieben. Die auf den beiden Signalwegen erzeugten Signale werden dann mit doppelter Abtastrate alternierend abgetastet und so ein Signal mit doppelter Abtastrate erzeugt. Vorteil dieser Anordnung ist, daß das Filter noch mit einer niedrigeren Abtastrate läuft und somit das Spektrum des zu verarbeitenden Signales in einem evtl. günstigeren Bereich liegt. Das eigentliche Filter läuft mit der halben gewünschten Abstrate, die durch die Einheit 4a bereitgestellt wird. Diese kann im einfachsten Fall der Einheit 3 bzw. 4 entsprechen. Die letztendliche Abtastrate wird von der Einheit 6 an das Filter 8a bereitgestellt. Das Filter 8a hat eine Übertragungsfunktion von $\frac{\sin x}{x}$.

Nachfolgend wird z.B. die Generierung eines 16 KHz Gebührenimpulssignales anhand Figur 1 bzw. 2 näher erläutert. Einheit 1 wird zu diesem Zweck von der Taktversorgungseinheit 3 mit einem 8 KHz Taktsignal versorgt. Die gewünschte vorgegebene Abtastrate soll beispielsweise 32 KHz betragen. In diesem Fall muß der Einheit 5 keine weitere Einheit zur Taktverdoppelung nachgeschaltet werden. Es wird jedoch ein Filter 8c gemäß Figur 2 benötigt, um ein Signal mit der Frequenz 16 KHz und der Abtastrate 32 KHz zu erhalten. Die Einheit 1 erzeugt zu diesem Zweck Abtastwerte mit gleicher Amplitude und einer Frequenz von 8 KHz. Dieses Signal entspricht einer mit 8 KHz abgetasteten Gleichspannung. Durch die Einheit 2, die z.B. als Tiefpaß vierter Ordnung ausgeführt ist, wird diesen Abtastwerten eine Hüllkurve aufgezwungen, so daß ein sanfter Ein- und Ausschwingvorgang generiert wird. Hierdurch wird eine Gaußkurvenähnliche Ein- und Ausschwinghüllkurve generiert. In der nachfolgenden Einheit 5 erfolgt nun die Verdoppelung der Abtastrate. Hierzu werden im vorliegenden Fall die Abtastwerte verdoppelt. Das heißt zwischen jeweils zwei bisherigen Abtastwerten wird ein weiterer Abtastwert mit der Amplitude des ersten Abtastwertes erzeugt. Die Abtastratenerhöhung könnte auch durch übliche Nullstopfung und Filterung (Übertragungsfunktion $\frac{\sin x}{x}$) erfolgen. Am Ausgang der Einheit 5 liegt dann ein Signal an, welches ungefiltert im Frequenzbereich zwischen 0 und 16 KHz eine Signalkomponente mit 0 KHz und eine weitere Signalkomponente mit 16 KHz usw. aufweist. Das nachgeschaltete Filter 8 filtert nun die unerwünschte Komponente aus, so daß lediglich das 16 KHz Sinussignal mit der gewünschten Hüllkurve bestehen bleibt. Dieses wird nochmals durch Überabtastung auf die gewünschte Abstrate von 32 KHz erhöht und kann digital am Ausgang 9 abgegriffen werden und der entsprechenden weiteren Schaltungsteilen der digitalten Vermittlungseinrichtung zugeführt werden.

Die Erzeugung eines 12 KHz Gebührensignales geschieht wie folgt: Die Abtastrate soll wie im obigen Beispiel ebenfalls 32 KHz betragen, so daß der Aufbau der Anordnung der in Figur 1 beschriebenen entspricht, wobei Einheit 5 direkt mit Einheit 7 verbunden ist. Einheit 1 erzeugt nun alternierende Abtastwerte mit einer Abtastfrequenz von 8 KHz. Das heißt es werden abwechselnd Abtastwerte mit positiver und negativer Amplitude erzeugt. Einheit 2 ist in diesem Fall z.B. als Hochpaß vierter Ordnung ausgebildet, um die gewünschte Hüllkurve zu erzeugen. Die Erhöhung der Abtastrate in Einheit 5 erfolgt folgendermaßen. Zwischen jeweils zwei alternierenden Abtastwerten wird eine sogenannte Nullstopfung durchgeführt. Das heißt, zwischen jeweils zwei Abtastwerten wird ein Nullwert eingefügt. Dieser Vorgang wiederholt sich in Einheit 7, so daß nun zwischen jeweils zwei von der Einheit 1 erzeugten alternierenden Abtastwerten drei Nullwerte eingefügt sind. Im Spektrum weist dieses ungefilterte digitale Signal unterhalb von 32 KHz eine Signalkomponente bei 4 KHz und eine weitere Signalkomponente bei 12 KHz auf. Das nachgeschaltete Filter 8 filtert die 4 KHz Komponente aus, so daß lediglich die 12 KHz Komponente mit einer Abtastrate von 32 KHz übrig bleibt.

Alternativ kann auch die in Figur 2 dargestellte Ausführungsform verwendet werden. Dann weist das ungefilterte Signal am Ausgang von Einheit 5 eine Abtastrate von 16 KHz auf und aufgrund des Abtasttheorems werden Spektrallinien bei 4 KHz und 12 KHz erzeugt. Dieses Signal wird in der Einheit 8a, die ebenfalls eine Übertragungsfunktion von $\frac{\sin x}{x}$ hat, so gefiltert, daß nur die Komponente mit 12 KHz übrigbleibt. Das so erhaltene Signal wird dann wie zuvor beschrieben überabgetastet, so daß am Ausgang von Anschluß 9 ein Sinussignal mit einer Frequenz von 12 KHz und eine Abtastrate von 32 KHz zur Verfügung steht.

Nachfolgend werden anhand der Figuren 3 bis 8 zwei Ausführungsformen für die Erzeugung eines 16 bzw. 12 KHz Gebührensignales näher erläutert.

Figur 3 zeigt Einheit 1 gemäß Figur 1 zur Erzeugung von Abtastwerten mit konstanter Amplitude. Die Einheit ist derart ausgebildet, daß über Koeffizienten 12, 14, 16 die Amplitude auf einen gewünschten Wert einstellbar ist. Mit 10 ist eine Einheit bezeichnet, welche eine Konstante mit dem Wert -1 ausgibt. Dieser wird nachfolgend um 1 Bit nach rechts geschoben, d.h. durch 2 geteilt und dem ersten Eingang einer ungesättigten Addierstufe 11 zugeführt. Der zweite Eingang der Addierstufe 11 wird konstant mit dem digitalen Wert Null beaufschlagt. Der Ausgang der Addierstufe 11 wird zum einen mit einem Koeffizienten 12 multipliziert und dem ersten Eingang einer zweiten ungesättigten Addierstufe 13 zugeführt und zum anderen dem jeweils zweiten Eingang der Addierstufe 13 und einer weiteren ungesättigten Addierstufe 15 sowie einer gesättigten Addierstufe 17 zugeführt. Der Ausgang der zweiten Addierstufe 13 wird mit einem Koeffizienten 14 multipliziert und dem ersten Eingang der Addierstufe 15 zugeführt. Das Ausgangssignal der Addierstufe 15 wird mit einem Koeffizienten 16 multipliziert und dem ersten Eingang der Addierstufe 17 zugeführt. Der Ausgang der Addierstufe 17 ist mit einer Anschlußklemme 18 verbunden, an der die digitalen Abtastwerte mit vorgegebener Amplitude abgegriffen werden können. Die Addierer 11, 13, 15 sind z.B. als einfache ungesättigte Addierstufen ausgebildet, an deren Ausgängen Werte zwischen ±2 abgegriffen werden können. Die Addierstufe 17 weist einen sogenannten gesättigten Addierer auf, der am Ausgang Werte von ±1 bereitstellen kann. Eine derartige Anordnung mit Festkomma-Arithmetik läßt sich insbesondere mit Signalprozessoren leicht realisieren.

Figur 4 zeigt eine Realisierungsmöglichkeit eines digitalen Tiefpasses zur Filterung der an der Anschlußklemme 18 anliegenden digitalen Signale. Anschlußklemme 18 ist mit dem ersten Eingang einer ungesättigten Addierstufe 19 verbunden. Das Ausgangssignal der Addierstufe 19 wird mit einem Koeffizienten 21 multipliziert und dem ersten Eingang einer gesättigten Addierstufe 22 zugeführt. Der Ausgang der Addierstufe 22 ist zum einen mit dem ersten Eingang einer ungesättigten Addierstufe 25 und zum anderen mit dem Eingang eines Verzögerungsglieds 24, z.B. ein Speicher, verbunden. Der Ausgang des Verzögerungsglieds 24 ist mit dem Eingang eines weiteren Verzögerungsglieds 23 verschaltet. Der Ausgang des Verzögerungsglieds 23 ist mit dem zweiten Eingang der Addierstufe 22 verbunden. Des weiteren wird das Ausgangssignal des Verzögerungsglieds 23 in der Einheit 20 mit -1 multipliziert und dem zweiten Eingang der Addierstufe 19 zugeführt. Das Ausgangssignal der Addierstufe 25 wird mit dem Koeffizienten 27 multipliziert und dem ersten Eingang einer gesättigten Addierstufe 28 zugeführt. Der Ausgang der Addierstufe 28 ist mit einer Anschlußklemme 31 und mit dem Eingang einer Verzögerungseinheit 30, z.B. einem Speicher, verbunden. Der Ausgang der Verzögerungseinheit 30 ist mit dem Eingang einer weiteren Verzögerungseinheit 29 verbunden. Das Ausgangssignal der Verzögerungseinheit 29 wird zum einen dem zweiten Eingang der Addierstufe 28 zugeführt und zum anderen über die Einheit 26 mit -1 multipliziert und dem zweiten der Addierstufe zugeführt.

In Figur 5 erfolgt über den Umschalter 32, 33, 34 eine Abtastratenerhöhung. Das an der Anschlußklemme 31 abgreifbare digitale Signal wird den beiden Umschaltkontakten 32, 33 zugeführt. Der Mittelkontakt 34 wechselt mit der doppelten Abtastrate, z.B. im vorbeschriebenen Fall 16 KHz, zwischen den Umschaltkontakten 32 und 33 und verdoppelt so die Abtastimpulse. Die weitere Verdoppelung und Filterung wird nun in der nachfolgenden Schaltungseinheit zusammengefaßt. Zu diesem Zweck ist ein digitales Filter 35...38 in zwei Signalwege aufgespalten und wird durch einen weiteren Umschalter 39, 40, 40a mit nochmals verdoppelter Abtastfrequenz von z.B. 32 KHz abgetastet und der Anschlußklemme 41 zugeführt.

Der Aufbau des Filters ist folgender. Das am Mittelkontakt 34 abgreifbare digitale Signal wird zum einen einer Verzögerungseinheit 35 und zum anderen, nachdem es durch zwei geteilt wurde, dem ersten Eingang eines gesättigten Addierers 36 zugeführt. Des weiteren wird dieses Signal durch die Einheit 38 mit -1 multipliziert und dem ersten Eingang eines weiteren gesättigten Addierers 37 zugeführt. Der zweite Eingang des Addierers 36 wird mit dem ebenfalls um 1 Bit nach rechts geschobenen Ausgangssignal des Verzögerungsglied 35 beaufschlagt. Der zweite Eingang der Addierstufe 37 wird mit einer Konstanten Null beaufschlagt. Die Ausgänge der Addierstufen 36 und 37 werden jeweils Umschaltkontakten 39 und 40 zugeführt.

Die übertragungsfunktion des gemäß Figur 5 beschriebenen Filters weist eine $\frac{\sin x}{x}$ -Charakteristik auf. Die Übertragungsfunktion ist so ausgebildet, alle Komponenten außer der 16 KHz Komponente des Ausgangssignals am Umschaltkontakt 34 ausfiltert. Gleichzeitig wird durch den Umschalter 39, 40, 40a die Abtastrate auf 32 KHz erhöht.

In den Figuren 6 bis 8 ist eine entsprechende Ausführungsform zur Erzeugung eines 12 KHz Sinussignales dargestellt.

In Figur 6 werden bei einer Abtastrate von 8 KHz Abtastwerte für ein Sinussignal mit einer Frequenz von 4 KHz und einstellbarer Amplitude erzeugt. Hierbei ist mit 42 wiederum eine Einheit bezeichnet, die eine Konstante mit dem Wert -1 ausgibt. Dieser Wert wird zum einen durch 2 geteilt und dem ersten Eingang einer Addierstufe 45 und zum anderen über eine Multiplikationseinheit 43, die diesen Wert mit -1 multipliziert, einem ersten Umschaltkontakt eines Umschalters 44 zugeführt. Der zweite Umschaltkontakt wird konstant mit dem digitalen Wert Null beaufschlagt. Der Mittelkontakt des Umschalters 44 wird dem zweiten Eingang der Addierstufe 45 zugeführt. Das Ausgangssignal der Addierstufe 45 wird zum einen mit einem Koeffizienten 46 multipliziert und dem ersten Eingang einer Addierstufe 47 zugeführt und zum anderen jeweils dem zweiten Eingang der Addierstufe 47, einer Addierstufe 49 und einer gesättigten Addierstufe 51. Das Ausgangssignal der Addierstufe 47 wird mit einem Koeffizienten 48 multipliziert und dem ersten Eingang einer Addierstufe 49 zugeführt. Das Ausgangssignal der Addierstufe 49 wird mit einem Koeffizienten 50 multipliziert und dem ersten Eingang der gesättigten Addierstufe 51 zugeführt. Das Ausgangssignal der gesättigten Addierstufe 51 kann an einer Anschlußklemme 52 abgegriffen werden.

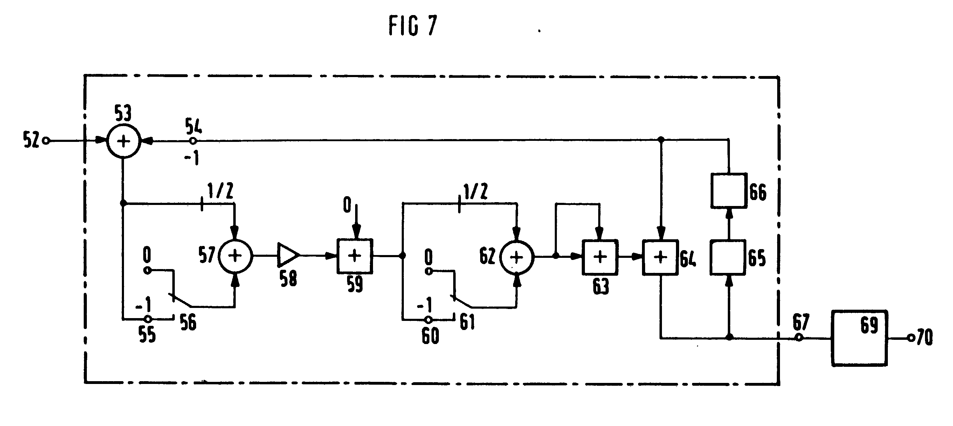

In Figur 7 wird das der Anschlußklemme 52 zugeführte digitale Signal dem ersten Eingang einer Addierstufe 53 zugeführt. Das Ausgangssignal der Addierstufe 53 wird zum einen um 1 Bit nach rechts verschoben und einer Addierstufe 57 zugeführt und zum anderen über die Einheit 55 mit -1 multipliziert und dem ersten Umschaltkontakt eines Umschalters 56 zugeführt. Der zweite Umschaltkontakt wird konstant mit dem digitalen Wert Null beaufschlagt. Der Mittelkontakt des Umschalters 56 ist mit dem zweiten Eingang der Addierstufe 57 verschaltet. Das Ausgangssignal der Addierstufe 57 wird mit einem Koeffizienten 58 multipliziert und dem ersten Eingang einer gesättigten Addierstufe 59 zugeführt. Der zweite Eingang der gesättigten Addierstufe 59 wird mit dem konstanten digitalen Wert Null beaufschlagt. Das Ausgangssignal der gesättigten Addierstufe 59 wird zum einen durch 2 geteilt und dem ersten Eingang einer ungesättigten Addierstufe 62 und zum anderen über die Einheit 60 mit 1 multipliziert und einem ersten Umschaltkontakt eines Umschalters 61 zugeführt. Der zweite Umschaltkontakt des Umschalters 61 wird mit dem digitalen Wert Null beaufschlagt. Der Mittelkontakt des Umschalters 61 ist mit dem zweiten Eingang der Addierstufe 62 verbunden. Das Ausgangssignal der Addierstufe 62 wird sowohl dem ersten wie auch dem zweiten Eingang einer gesättigten Addierstufe 63 zugeführt. Der Ausgang der Addierstufe 63 ist mit dem ersten Eingang der Addierstufe 64 verbunden. Der Ausgang der Addierstufe 64 ist zum einen mit einer Anschlußklemme 67 und zum anderen mit einem Verzögerungsglied 65 verbunden. Der Ausgang des Verzögerungsglieds 65 ist mit dem Eingang eines weiteren Verzögerungsglieds 66 verbunden. Das am Ausgang des Verzögerungsglieds 66 anliegende Ausgangssignal wird zum einen dem zweiten Eingang der Addierstufe 64 zugeführt und zum anderen über die Einheit 54 mit dem Wert -1 multipliziert und dem zweiten Eingang der Addierstufe 53 zugeführt. Die Einheiten 53...66 bilden somit eine erste Stufe 68 eines Hochpaßfilters. Mit 69 ist eine zweite Stufe, die entsprechend der ersten Stufe 68 aufgebaut ist, bezeichnet, deren Eingang mit der Anschlußklemme 67 verbunden ist und deren Ausgang mit einer Anschlußklemme 70 verbunden ist.

In Figur 8 ist die Einheit zur Erhöhung der Abtastrate und anschließenden Filterung gemäß der Einheit 8a aus Figur 2 dargestellt. Das der Anschlußklemme 70 zugeführte Signal wird dem ersten Anschluß eines Umschalters 71 zugeführt. Der zweite Anschluß des Umschalters 71 wird mit dem konstanten digitalen Wert Null beaufschlagt. Das Ausgangssignal am Mittelkontakt des Umschaltes 71 wird zum einen einem Verzögerungsglied 72 und zum anderen um 1 Bit nach rechts verschoben und dem ersten Eingang einer gesättigten Addierstufe 73 zugeführt. Das Ausgangssignal des Zeitverzögerungsglieds 72 wird ebenfalls um 1 Bit nach rechts verschoben und dem zweiten Eingang der Addierstufe 73 zugeführt. Des weiteren wird das Ausgangssignal am Mittelkontakt des Umschalters 71 um 3 Bit nach rechts geschoben und dem ersten Eingang einer ungesättigten Addierstufe 74 zugeführt. Außerdem wird das am Mittelkontakt des Umschalters 71 anliegende Ausgangssignal um 1 Bit nach rechts verschoben, dem zweiten Eingang der Addierstufe 74 sowie direkt dem zweiten Eingang einer ungesättigten Addierstufe 76 und ebenfalls um 1 Bit nach rechts verschoben dem zweiten Eingang einer ungesättigten Addierstufe 77 zugeführt. Das Ausgangssignal der Addierstufe 74 wird um 2 Bit nach rechts verschoben und über die Einheit 75 mit -1 multipliziert und dem ersten Eingang der Addierstufe 76 zugeführt. Das Ausgangssignal der Addierstufe 76 wird um zwei Bit nach rechts verschoben und dem ersten Eingang der Addierstufe 77 zugeführt. Das Ausgangssignal der Addierstufe 77 wird mittels der Einheit 78 mit -1 multipliziert und dem ersten Eingang einer gesättigten Addierstufe 79 zugeführt. Der zweite Eingang der Addierstufe 79 wird mit dem digitalen konstanten Wert Null beaufschlagt. Das Ausgangssignal der Addierstufe 79 den zweiten Umschaltkontakt des Umschalters 80 zugeführt. Der Mittelkontakt des Umschalters 80 ist mit einer Anschlußklemme 81 verbunden, an der das Ausgangssignal der gesamten Anordnung abgreifbar ist.

Im dargestellten Beispiel werden mit der Anordnung 42...52 alternierende Abtastwerte mit einer Abtastfrequenz von 8 KHz erzeugt. Über die Koeffizienten 46, 48 und 50 kann die Amplitude des so erzeugten digitalen Sinussignals beeinflußt werden. Die Anordnung gemäß Figur 6 stellt einen Hochpaß dar, der für das gewünschte Einschwingverhalten der digital erzeugten Gebührenimpulse sorgt. Mittels des Umschalters 71, der mit 16 KHz getaktet wird, erfolgt nun eine Nullstopfung der zuvor erzeugten alternierenden digitalen Abtastwerten. Die nachfolgende nochmalige Erhöhung auf die Abtastrate 32 KHz erfolgt wie bereits im vorherigen Beispiel dadurch, daß das nachgeschaltete Filter mit der $\frac{\sin x}{x}$-Übertragungsfunktion in zwei Signalwege aufgeteilt ist und die beiden Signalwege durch den Umschalter 80 mit einer Abtastfrequenz von 32 KHz abwechselnd abgetastet werden und an der Anschlußklemme 81 das digital erzeugte Sinussignal mit der Abtastfrequenz 32 KHz abgegriffen werden kann.

Die in den Figuren 2 bis 4 bzw. 5 bis 7 dargestellten Anordnungen lassen sich insbesondere mit einem digitalen Signalprozessor realisieren, welcher z.B. mit Festkomma-Arithmetik arbeitet. Es ist aber ebenso eine entsprechend dimensionierte fest verdrahtete Schaltungsanordnung möglich.

Die Ausführungsbeispiele in den Figuren 3 bis 7 weisen keine Grenzzyklen auf, so daß bei Eingabe von digitalen Nullwerten auch am Ausgang digitale Nullwerte erscheinen.

Aufgrund der Rekursion der Filter vierter Ordnung ergibt sich ein sehr weiches Ein- und Ausschwingverhalten der Gebührenimpulse.

Die Anzahl der Verdopplungsstufen der Abtastrate ist an die jeweils zu erzeugende Abtastrate und die Ausgangsabtastrate anzupassen. Die zuvor beschriebenen beiden Ausführungsformen stellen bevorzugte Ausführungen dar. Selbstverständlich sind mit dem Verfahren auch andere Frequenzen erzeugbar. Die zu erzeugende Frequenz des Signals ist jedoch von der Abtastrate abhängig.

Durch Überabtastung des verfahrensgemäß erzeugten digitalen Signals kann eine weitere Abtastratenerhöhung erfolgen.

**Patentansprüche**

1. Verfahren zur Erzeugung eines digitalen Sinussignales mit einer vorgegebenen Abtastrate
   **gekennzeichnet durch**
   die Schritte:

   a) Erzeugung einer im Vorzeichen der Amplitude wechselnden oder konstanten Impulsfolge mit einer Abtastfrequenz, die eine durch $2^n$ ge-

teilte Frequenz der vorgegebenen Abtastrate aufweist,

b) Generierung einer Hüllkurve,

c) Verdoppelung der Abtastrate,

d) Wiederholen des Schrittes c), bis im ungefilterten Spektrum des erzeugten Signals das gewünschte Sinussignal erzeugt ist,

e) Ausfiltern der unerwünschten Frequenzanteile,

f) evtl. nochmaliges Erhöhen der Abtastrate durch Überabtastung des zuvor erzeugten Signals.

**2.** Verfahren nach Anspruch 1,
**dadurch gekennzeichnet, daß** die Verdopplung der Abtastrate durch Nullstopfung bei in der Amplitude wechselnder Signalfolge bzw. durch Abtastwertverdopplung andernfalls erfolgt.

**3.** Verfahren nach Anspruch 1 oder 2,
**dadurch gekennzeichnet,**
**daß** die Hüllkurve mittels eines Filters erzeugt wird.

**4.** Schaltungsanordnung mit Mitteln zur Durchführung der Schritte eines Verfahrens nach einem der vorhergehenden Ansprüche,
**dadurch gekennzeichnet,**
**daß** eine erste Einheit zur Erzeugung digitaler Abtastwerte vorgesehen ist,
daß der Einheit zur Erzeugung digitaler Abtastwerte ein Filter zur Erzeugung einer Hüllkurve nachgeschaltet ist, daß der Einheit zur Erzeugung einer Hüllkurve Einheiten zur Erhöhung der Abtastfrequenz nachgeschaltet sind, und daß die so erzeugten digitalen Abtastwerte durch ein digitales Filter gefiltert werden.

**5.** Schaltungsanordnung nach Anspruch 4,
**dadurch gekennzeichnet,**
**daß** die letzte Einheit zur Verdoppelung der Abtastrate und das nachgeschaltete digitale Filter in einer Einheit zusammengefaßt sind, wobei das digitale Filter in zwei Signalwege aufgeteilt ist und die beiden Signalwege durch einen Umschalter mit der doppelten Abtastfrequenz des digitalen Filters alternierend abgetastet werden.

## Claims

**1.** Method for producing a digital sine signal at a prescribed sampling rate,
**characterized by**
the following steps:

a) a pulse train whose amplitude has a changing arithmetic sign or which is constant is produced at a sampling frequency whose frequency is the prescribed sampling rate divided by $2^n$,

b) an envelope is generated,

c) the sampling rate is doubled,

d) step c) is repeated until the sine signal required has been produced in the unfiltered spectrum of the signal produced,

e) the undesirable frequency components are filtered out,

f) the sampling rate is possibly increased again by oversampling the signal produced previously.

**2.** Method according to Claim 1,
**characterized**
**in that** the sampling rate is doubled by zero insertion for a signal train whose amplitude changes or otherwise by sample doubling.

**3.** Method according to Claim 1 or 2,
**characterized**
**in that** the envelope is produced using a filter.

**4.** Circuit arrangement having means for carrying out the steps of a method according to one of the preceding claims,
**characterized**

in that a first unit is provided for producing digital samples,

in that the unit for producing digital samples has a filter for producing an envelope connected downstream,

in that the unit for producing an envelope has units for increasing the sampling frequency connected downstream,

and in that the digital samples produced in this manner are filtered by a digital filter.

**5.** Circuit arrangement according to claim 4,
**characterized**
**in that** the last unit for doubling the sampling rate and the digital filter connected downstream are combined to form one unit, with the digital filter being split into two signal paths, and the two signal paths being sampled alternately by a changeover switch at twice the sampling frequency of the digital filter.

## Revendications

**1.** Procédé pour la production d'un signal sinus numérique ayant une fréquence d'échantillonnage prédéterminée,
**caractérisé par** les étapes de :

a) production d'une suite d'impulsions constante ou alternant quant au signe de l'amplitude avec une fréquence d'échantillonnage qui a une fréquence divisée par $2^n$ de la fréquence d'échantillonnage prédéterminée,

b) génération d'une courbe enveloppante,

c) doublement de la fréquence d'échantillonnage,

d) répétition de l'étape c) jusqu'à ce que le signal sinus souhaité soit produit dans le spectre non filtré du signal produit,

e) élimination par filtrage des composantes fréquentielles non souhaitées,

f) éventuellement, nouvelle augmentation de la fréquence d'échantillonnage par suréchantillonnage du signal produit auparavant.

2. Procédé selon la revendication 1,
   **caractérisé par** le fait que le doublement de la fréquence d'échantillonnage s'effectue par justification en zéro pour une suite de signal alternant en amplitude ou par doublement de valeurs échantillonnées sinon.

3. Procédé selon la revendication 1 ou 2,
   **caractérisé par** le fait qu'on produit la courbe enveloppante au moyen d'un filtre.

4. Circuit comportant des moyens pour la mise en oeuvre des étapes d'un procédé selon l'une des revendications précédentes,
   **caractérisé par** le fait que

   il est prévu une première unité pour produire des valeurs échantillonnées numériques,
   un filtre pour produire une courbe enveloppante est branché du côté aval de l'unité pour produire des valeurs échantillonnées numériques,
   des unités pour augmenter la fréquence d'échantillonnage sont branchées du côté aval de l'unité pour produire une courbe enveloppante,
   et les valeurs échantillonnées numériques ainsi produites sont filtrées par un filtre numérique.

5. Circuit selon la revendication 4,
   **caractérisé par** le fait que la dernière unité pour le doublement de la fréquence d'échantillonnage et le filtre numérique branché du côté aval sont regroupés dans une unité, le filtre numérique étant divisé en deux voies de signaux et les deux voies de signaux étant échantillonnées en alternance par un commutateur avec le double de la fréquence d'échantillonnage du filtre numérique.

FIG 1

FIG 2

FIG 3

FIG 4

FIG 5

FIG 6

FIG 8

FIG 7

EP 0 676 887 B1